# FASCICULE DE BREVET EUROPEEN

(11) **EP 2 633 651 B1**
(45) Date de publication et mention de la délivrance du brevet: **03.09.2014**
(21) Numéro de dépôt: 11774040.7
(22) Date de dépôt: 21.10.2011
(51) Int. Cl.: H04L 12/801

(54) **PROCÉDÉ ET DISPOSITIF DE DÉTECTION DE LA CONGESTION D'UN LIEN DE TRANSMISSION**
VERFAHREN UND VORRICHTUNG ZUR ERKENNUNG DER ÜBERLASTUNG EINER ÜBERTRAGUNGSVERBINDUNG
METHOD AND DEVICE FOR DETECTING THE CONGESTION OF A TRANSMISSION LINK

(30) Priorité: 27.10.2010 FR 1004220
(43) Date de publication de la demande: 04.09.2013
(73) Titulaire: Astrium SAS, 92150 Suresnes (FR)
(72) Inventeur: POLETTI, Claude, F-92260 Fontenay Aux Roses (FR); CARTIGNY, Marc, F-78400 Chatou (FR); KLOTZ, Olivier, F-94300 Vincennes (FR)
(74) Mandataire: Maillet, Alain
(86) Numéro de dépôt international: PCT/EP2011/068439
(87) Numéro de publication internationale: WO 2012/055783

(56) Documents cités:
- US-A1- 2003 067 872
- BENMOHAMED L ET AL: "FEEDBACK CONTROL OF CONGESTION IN PACKET SWITCHING NETWORKS: THE CASE OF A SINGLE CONGESTED NODE", IEEE / ACM TRANSACTIONS ON NETWORKING, IEEE / ACM, NEW YORK, NY, US, vol. 1, no. 6, 1 décembre 1993 (1993-12-01), pages 693-708, XP000430139, ISSN: 1063-6692, DOI: DOI:10.1109/90.266057

## Description

La présente invention concerne le domaine de la détection de la congestion sur un lien de transmission au sein d'un réseau de communication.

Les réseaux de communication modernes sont constitués d'une pluralité de noeuds de communication reliés entre eux par des liens de communication. Ces noeuds de communication comprennent des équipements terminaux tels que des postes informatiques, des terminaux de communication mobiles ou encore des serveurs d'application. Ces noeuds comprennent également des équipements intermédiaires tels que des relais, des routeurs qui servent à l'interconnexion et au routage du trafic de données entre les équipements terminaux. Un example de l'état de la technique se trouve dans US2003/067872.

Les liens de communication sont basés sur des technologies de transmission physique très diverses. On peut citer des technologies filaires comme la fibre optique, les liens Ethernet ou autres et des technologies radio selon un large panel de protocoles tels que le WiFi, le WiMax, les liens satellites ou autres. Chacune de ces technologies conduit à des propriétés différentes concernant le canal de transmission utilisé tant en bande passante disponible, taux d'erreur ou variabilité de cette bande passante disponible. Aujourd'hui, la technologie dominante est une technologie de communication par paquet, typiquement le réseau IP (*Internet Protocol* en anglais).

Ces réseaux de communication servent à mettre en oeuvre une grande diversité de services, comme l'échange de communication voix, typiquement les services dits de VoIP (*Voice over IP* en anglais), la diffusion de programmes multimédia, typiquement des services télévisuels ou d'accès à des vidéos à la demande ou encore l'accès à des données, typiquement l'accès à des services WEB.

Ces applications ont des besoins en bande passante, latence qui dépend de l'application. Les réseaux par transfert de paquets ne permettent pas historiquement de garantir une bande passante ou une latence donnée à un service particulier. Au contraire, les réseaux de communication par circuit sont basés sur l'établissement d'un circuit de communication entre les équipements finaux communiquants qui garantit une bande passante et une latence entre ces équipements dès lors que le circuit est établi. Un exemple de tels réseaux par circuit est le réseau téléphonique commuté.

Pour permettre le développement de services ayant des besoins contraints en bande passante et/ou en latence sur les réseaux de communication par paquet, un ensemble de technologies ont été développées et sont connues sous le vocable de QOS *(Quality Of Service* en anglais). Ces technologies sont basées sur la définition d'un ensemble de catégories de services en fonction des contraintes en communication. Le réseau est partitionné en domaines appliquant une politique de qualité de service. Les paquets de données entrant dans le domaine sont marqués en fonction de la catégorie du service qui les émet *(coloring* en anglais), les flux de données sont admis ou refusés en entrée, leur débit peut être régulé (*policing* en anglais). Des priorités sont attribuées aux différentes catégories et les équipements intermédiaires du réseau qui font face à une congestion utilisent ces priorités pour éliminer les paquets les moins prioritaires et favoriser la transmission des paquets appartenant aux flux de données les plus prioritaires.

Les liens physiques les plus délicats à gérer sont les liens radio. Un lien de communication radio bidirectionnel est typiquement réalisé par deux liens radio monodirectionnels, chaque lien monodirectionnel utilisant une fréquence ou une gamme de fréquence particulière. Ces liens radio sont sujets à des variations fortes de leur bande passante en fonction de leur environnement, ils sont soumis à de l'atténuation, aux interférences ou autres qui dégradent dynamiquement leurs capacités de transmission.

Des mécanismes d'adaptation radio connus sous le terme anglais de *radio link adaptation* ont été développés. Ces mécanismes fonctionnent généralement au niveau du lien physique ou de la couche MAC (*Media Access Control* en anglais). Ces mécanismes ont un temps de réaction rapide et ne sont pas liés aux mécanismes de qualité de service de niveau applicatif. En particulier il n'est pas possible de jouer sur la politique de contrôle de l'admission des services aux bornes d'un domaine de qualité de service à partir de ces mécanismes sans faire remonter des informations du lien physique ou de sa couche MAC vers la couche application gérant ces mécanismes d'admission de service. Leur temps de réaction est typiquement trop rapide pour une interaction avec le mécanisme de qualité de service. Ils ne servent typiquement qu'à désigner les paquets prioritaires de ceux pouvant être perdus lors d'une congestion.

L'invention vise à résoudre les problèmes précédents par un mécanisme de détection de la congestion d'un lien de transmission. Ce mécanisme est géré par la couche applicative entre un ou plusieurs émetteurs de données et un ou plusieurs récepteurs. Il est donc indépendant des fabricants d'équipements physiques et MAC des couches inférieures. Il consiste à mesurer le débit sortant de l'émetteur et le débit entrant dans le ou les récepteurs sur une période définie. Ces débits sont échangés à l'issue de chaque période. Une différence sur ces débits met en évidence une congestion. L'information est remontée au mécanisme d'admission des services.

L'invention concerne un procédé de détection de la congestion d'un lien de transmission, le lien de transmission comportant deux extrémités, à chaque extrémité étant connectés un ou plusieurs équipements ou noeuds dits terminaux, au moins une extrémité ne comportant qu'un équipement unique, qui comporte une étape de détermination d'une période de calcul ; une étape de détermination d'un maître et d'un ou plusieurs esclaves parmi les équipements connectés aux extrémités du lien de transmission, le maître étant toujours l'équipement unique d'une extrémité du lien ; une étape de calcul par chaque équipement du débit de données émises ou reçues pendant chaque période au sein de la couche applicative dudit équipement ; une étape d'émission à l'issue de chaque période d'une requête par le maître à destination du ou des esclaves comportant le débit calculé par le maître pour la période précédente sous la forme d'un message au sein de la couche applicative ; une étape de comparaison au sein de la couche applicative des débits émis et reçus aux deux extrémités du lien et une étape de détermination au sein de la couche applicative d'une congestion lorsque le débit reçu à l'une des extrémités est inférieur au débit émis à l'autre extrémité.

Selon un mode de réalisation particulier de l'invention, le procédé comporte en outre une étape d'émission par chaque esclave lors de la réception de la requête du maître d'une réponse comportant le débit émis ou reçu par ledit esclave pendant la période précédente sous la forme d'un message au sein de la couche applicative.

Selon un mode de réalisation particulier de l'invention, le procédé comporte en outre l'émission d'un message d'acquittement par le maître du ou des réponses reçues sous la forme d'un message au sein de la couche applicative.

Selon un mode de réalisation particulier de l'invention, le procédé comporte en outre, l'esclave étant également unique à son extrémité du lien, l'étape de comparaison étant faite par l'esclave, une étape d'émission par l'esclave lors de la réception de la requête du maître d'une réponse comportant le débit émis ou reçu par ledit esclave pendant la période précédente lorsqu'une congestion est déterminée, sous la forme d'un message au sein de la couche applicative.

Selon un mode de réalisation particulier de l'invention, le procédé comporte en outre une étape de calcul du temps de parcours aller-retour lors de la réception d'une réponse par le maître ou d'un message d'acquittement par un esclave, un allongement progressif de ce temps permettant de prédire une congestion.

Selon un mode de réalisation particulier de l'invention, le procédé comporte en outre une étape de détection de la perte d'un lien intermédiaire alors qu'il existe toujours un chemin entre l'émetteur et le récepteur par un allongement soudain du temps de parcours aller-retour.

L'invention concerne également un procédé de gestion de la qualité de service caractérisé en ce qu'il comporte une étape de détermination de l'admission des services aux frontières d'un domaine de qualité de service en fonction d'une détermination de la congestion d'au moins un lien tel que décrit précédemment.

L'invention concerne également un équipement connecté à une extrémité d'un lien de transmission, une période de calcul étant définie, qui comporte au sein de la couche applicative des moyens de calcul du débit de données émises ou reçues pendant chaque période ; des moyens d'émettre à l'issue de chaque période d'une requête, à destination du ou des équipements connectés à l'autre extrémité du lien, comportant le débit calculé pour la période précédente ; des moyens de comparer au sein de la couche applicative les débits émis et reçus aux deux extrémités du lien et des moyens pour déterminer une congestion lorsque le débit reçu à l'une des extrémités est inférieur au débit émis à l'autre extrémité.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture générale d'un exemple de réalisation de l'invention.
La Fig. 2 illustre l'architecture en couche typique d'un lien de communication.
La Fig. 3 illustre l'échange de messages d'un exemple de réalisation de l'invention dans le cas d'un émetteur et d'un récepteur.
La Fig. 4 illustre l'échange de messages d'un autre exemple de réalisation dans le cas d'un émetteur et d'un récepteur.
La Fig. 5 illustre l'échange de messages d'un exemple de réalisation dans le cas où l'émetteur ou le récepteur est multiple.

L'exemple de réalisation de l'invention est fait dans le cadre d'une transmission de données sur un lien satellite. Toutefois, l'invention peut être utilisée dans le cadre de toute technologie de lien de transmission.

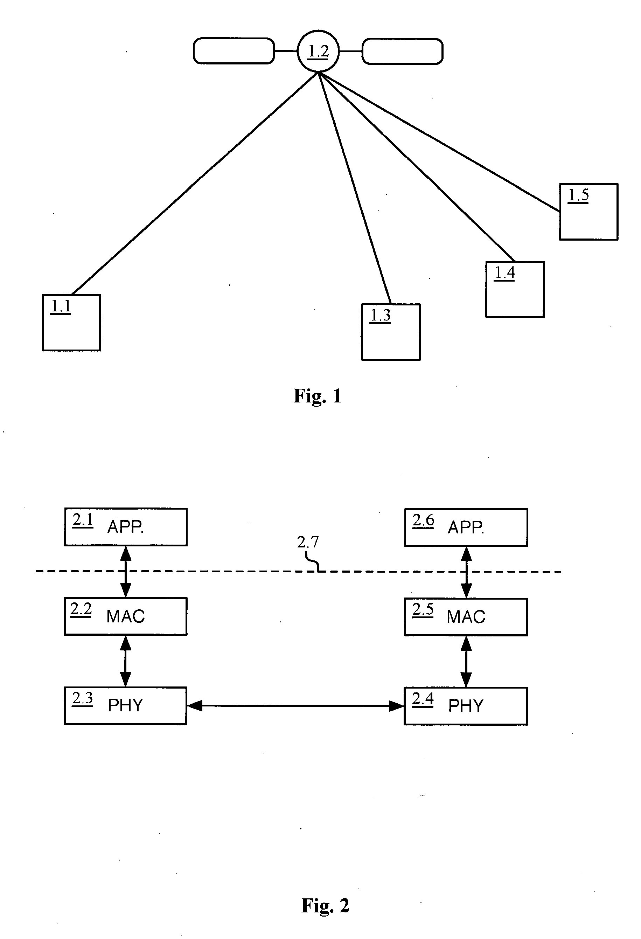

La Fig. 1 illustre l'architecture générale d'une transmission par satellite. Typiquement un équipement 1.1 émet des flux correspondants à un ou plusieurs services vers un ou plusieurs équipements terminaux 1.3, 1.4 et 1.5. La transmission est relayée par un satellite 1.2. Ce type de transmission possède les caractéristiques suivantes. La transmission s'effectue par radio, le canal de transmission est donc soumis à des perturbations dues, entre autres, à la météo. La bande passante disponible est donc variable dans le temps.

Cette transmission implique souvent un équipement de type tête de réseau, ici l'équipement 1.1 et un nombre variable d'équipements terminaux. On a donc une communication de un vers plusieurs et en retour une communication de plusieurs vers un. Toutefois le cas d'un seul émetteur et d'un seul récepteur est également courant. Est également courant, le cas de un vers plusieurs et de même en retour de un vers plusieurs.

On s'intéresse plus particulièrement à la transmission de services sur le lien satellite. Ces services possèdent des propriétés différentes. Certains services ont un besoin d'une garantie de disponibilité de bande passante. On peut citer les exemples des échanges de voix sur **IP,** les services émulant l'établissement d'un circuit comme les échanges téléphoniques, ou encore la diffusion de programmes vidéo encodés à débit constant ou non. Tous ces services sont temps réels et vont cesser de fonctionner dès lors que la bande passante disponible devient inférieure à la bande passante nécessaire.

Ces services sont admis ou pas en entrée du domaine de qualité de service en fonction de la bande passante disponible. Ce calcul de la bande passante est basé sur une capacité du lien de transmission théorique. Lorsque le canal de transmission est perturbé, cette capacité peut devenir inférieure et la politique d'admission des services devient incohérente avec les capacités réellement disponibles.

En l'absence d'ajustement de la politique d'admission, la perte de paquets va impacter les différents services et éventuellement ils vont tous cesser de fonctionner. Au contraire un ajustement de la politique d'admission va désigner un service à interrompre permettant aux autres services de continuer à fonctionner normalement. Le choix du service est géré par la politique de qualité de service et n'entre pas dans le cadre de ce document.

La Fig. 2 illustre l'architecture en couche d'un lien de communication entre un émetteur et un récepteur. Des deux côtés de la transmission, l'échange de données se fait entre deux modules applicatifs 2.1 et 2.6. Ces modules applicatifs sont implémentés sur des équipements réseau quelconque, l'un des équipements étant émetteur des données pour la couche applicative et l'autre récepteur de données pour la couche applicative. Sur chaque équipement, les paquets de données à transmettre sont passés à une couche inférieure chargée du contrôle de l'accès au lien 2.2 et 2.5, la couche MAC. Celle-ci passe alors les paquets de données à la couche physique 2.3 et 2.4 qui réalise l'échange physique des données sur le lien. Éventuellement, des équipements intermédiaires comme des relais ou des routeurs interviennent en complément du niveau MAC et au niveau physique entre les équipements terminaux. Ces équipements intermédiaires sont invisibles de la couche applicative. Nous avons donc un lien au niveau applicatif dont on cherche à détecter la congestion, des équipements connectés aux extrémités de ce lien au niveau applicatif. Ce lien au niveau applicatif peut être composé d'un ou plusieurs liens au niveau MAC ou physique reliés par des équipements intermédiaires qui n'interagissent pas avec la couche applicative.

Des mécanismes de gestion de la qualité de service, dont en particulier la politique d'admission d'un nouveau service aux frontières du domaine de qualité de service, sont typiquement implémentés dans la couche applicative. Par exemple, lors de l'établissement d'une nouvelle communication téléphonique, c'est là qu'une décision est prise d'admettre la communication ou pas selon les capacités théoriques des liens impliqués dans la communication. Il en est de même pour une requête d'un équipement terminal pour la diffusion d'un service multimédia temps réel comme la vision d'une vidéo.

L'invention se base sur un échange de messages entre un émetteur et un récepteur, un émetteur et plusieurs récepteurs ou plusieurs émetteurs et un récepteur. Ces équipements sont connectés aux extrémités d'un canal de transmission. On se restreint au cas où au moins une extrémité du lien radio ne comporte qu'un équipement unique. L'un des équipements est désigné comme maître et les autres esclaves. Le maître est toujours l'équipement unique d'une extrémité du lien. Ces échanges visent à permettre de synchroniser les mesures du maître et du ou des esclaves liés et visent à permettre au maître de calculer et de comparer le débit des données émises et le débit des données reçues. Une divergence dans les débits calculés met en évidence une congestion du lien. Tous les échanges sont faits au sein de la couche applicative et n'impliquent donc aucune brèche dans la politique éventuelle de sécurité entre la couche applicative et les couches sous-jacentes qui pourraient être d'un niveau de sécurité inférieur. Dans un tel cas, typiquement une frontière 2.7 crée un cloisonnement de sécurité entre les couches physiques et de contrôle du lien et la couche applicative.

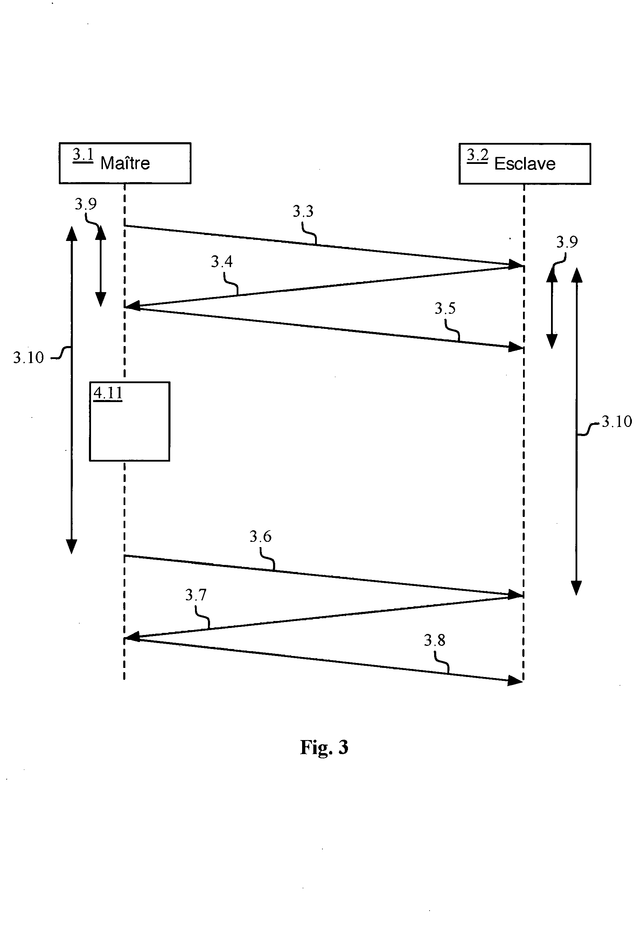

La Fig. 3 illustre un premier mode de réalisation entre un émetteur et un récepteur. Nous sommes dans le cas d'une liaison de transmission point à point. Dans cet exemple, l'extrémité 3.1 est désignée comme maître tandis que l'extrémité 3.2 est désignée comme esclave. On remarquera que les rôles des deux extrémités peuvent être inversés sans modification du procédé. Le maître peut donc être l'émetteur ou le récepteur. Une période 3.10 est définie. Le maître envoie une requête de synchronisation 3.3 qui comporte avantageusement le débit émis ou reçu par lui-même lors de la période précédente vers l'esclave. On comprend qu'il est ici possible de transmettre, par exemple, la quantité de données transmises pendant la période au lieu du débit exprimé en octets ou en nombre de paquets. Le calcul du débit est alors fait par l'autre extrémité.

Lorsque l'esclave reçoit cette requête, il répond avantageusement par un message 3.4 qui comporte le débit émis ou reçu par lui-même pendant la même période. La réponse est avantageusement acquittée par le maître sous la forme d'un message d'acquittement 3.5. À l'aide de l'information de débit de l'autre extrémité, le maître est en mesure d'effectuer un traitement 4.11 pour déterminer si le lien est congestionné ou pas. Alternativement ce traitement peut être fait par l'esclave qui possède les mêmes informations. Ce traitement vise à comparer les valeurs de débit et à déterminer un état de congestion lorsque le débit reçu devient inférieur au débit émis au-delà d'un seuil fixé. Cette information de congestion peut alors être remontée vers le gestionnaire de qualité de service pour être utilisée avantageusement dans la politique d'admission des services aux frontières du domaine.

La requête, la réponse et l'acquittement sont envoyés sous la forme de messages au sein de la couche applicative.

Avantageusement, la période 3.10 est choisie en cohérence avec les cycles du système de gestion de la politique de qualité de service. Typiquement elle est de l'ordre de une à quelques secondes. Elle est prédéterminée, mais peut avantageusement être modifiée par le maître en introduisant une nouvelle valeur de période dans la requête. La modification est alors acquittée par l'esclave dans son message de réponse.

Avantageusement, l'échange de message permet une mesure du temps de parcours aller-retour RTT 3.9 (pour *Round Trip Time* en anglais) entre les extrémités du lien. Cette mesure peut être effectuée par le maître en mesurant le temps entre l'émission de la requête 3.3 et la réception du message 3.4 ou par l'esclave en mesurant le temps entre l'émission du message 3.4 et la réception de l'acquittement 3.5. Cette mesure permet d'affiner les calculs de débit en tenant compte de la latence de transmission entre l'émetteur et le récepteur. Il permet aussi de prédire l'apparition d'une congestion car typiquement la latence augmente progressivement avant que les mesures de débit ne permettent une mesure de la congestion.

Une autre utilisation de l'information du temps de parcours est la détection de la perte d'un lien intermédiaire alors qu'il existe toujours un chemin entre l'émetteur et le récepteur. S'il n'existe pas d'autres chemins, les deux extrémités du lien détectent la chute du lien en constatant la cessation des échanges. Par contre, il n'en est pas de même dans le cas où le lien n'est pas rompu. En effet, si un chemin intermédiaire devient inopérationnel, le trafic va emprunter un chemin différent ayant un nombre de liens intermédiaires typiquement plus élevés et donc une latence plus importante alors même que le débit peut être suffisant pour ne pas impacter les mesures de débit. Cela se traduit typiquement par un allongement soudain du temps de parcours aller-retour. La mesure de la latence permet donc de détecter l'occurrence de ces problèmes. Ceci est souhaitable car, par exemple, s'il s'agit de liens satellites, le flux peut être amené à faire deux allers-retours jusqu'au satellite ce qui n'est pas toujours souhaitable du point de vue économique.

À l'issue de la période 3.10, l'échange de messages se reproduit à l'identique avec les messages 3.6, 3.7 et 3.8. Une rupture du lien est détectée par les deux extrémités par une interruption de ces échanges.

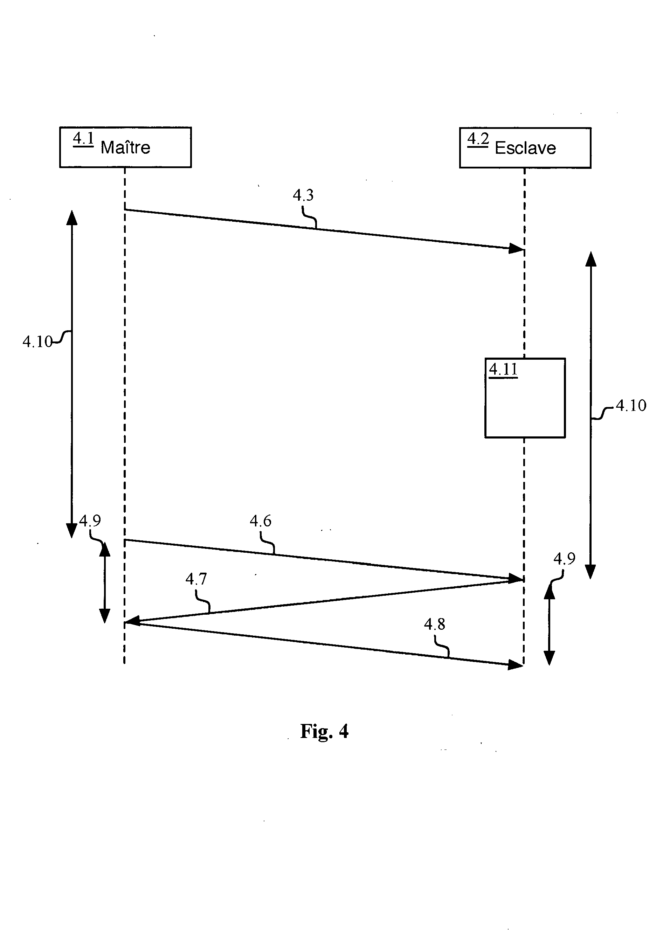

La Fig. 4 illustre un second mode de réalisation de l'invention. Dans cette variante, c'est l'esclave qui compare le débit reçu par le maître avec son propre débit. Tant que les débits correspondent, il ne répond pas à la requête 4.3. C'est uniquement lorsqu'une divergence apparaît entre les débits qu'il répond à la requête 4.6 par un message de réponse 4.7, laquelle réponse est acquittée par le message 4.8.

Cette variante permet d'économiser la bande passante en diminuant le trafic généré par le protocole de détection de la congestion et permet une implémentation de ces échanges en option d'un protocole existant. Par contre, il devient impossible pour le maître de détecter une perte de la connexion sur absence de réponse de l'esclave car l'esclave ne répond pas systématiquement aux messages de requête. Ce n'est pas forcément gênant, car une telle perte est détectable par l'esclave sur absence des messages cycliques 4.3. De même, le calcul de latence par le calcul du temps de parcours aller-retour n'est possible qu'en présence de congestion.

Avantageusement, le message de synchronisation (4.3, 4.6) peut être intégré au message de maintien de la connexion (*keep-alive-routing message* en anglais) du protocole de routage utilisé, par exemple OSPF.

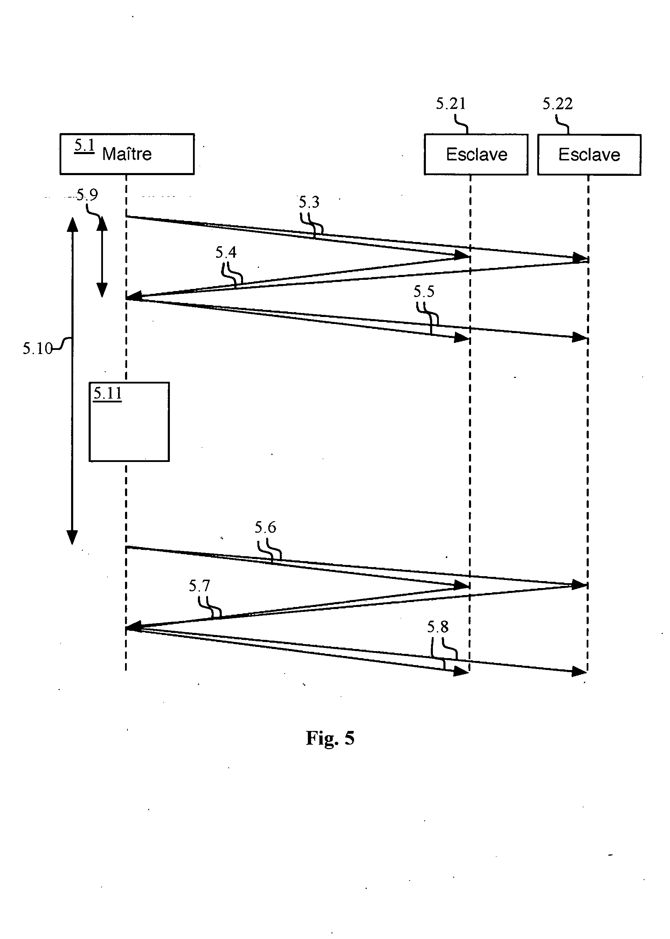

La Fig. 5 illustre un mode de réalisation de l'invention dans le cas d'un lien de transmission entre un point et plusieurs points. Cette liaison peut être réalisée dans une direction, point à multipoint, ou dans l'autre, multipoint à point, c'est-à-dire d'un émetteur vers plusieurs récepteurs ou de plusieurs émetteurs vers un récepteur. On exclut ici le cas de plusieurs émetteurs vers plusieurs récepteurs. Le canal de transmission est typiquement partagé selon une division temporelle de type TDMA (*Time division Multiple Access* en anglais) dans le cas d'une liaison de transmission de multipoint à point. Les liens que l'on étudie ici sont typiquement monodirectionnels. Ces liens monodirectionnels peuvent être combinés diversement pour constituer des liens bidirectionnels. Ces topologies devant être prises en compte pour l'admission de services bidirectionnels sur la base de la détection de la congestion dans les deux directions. Un lien bidirectionnel peut aussi être constitué de deux liens monodirectionnels utilisant le même lien physique, typiquement la même fréquence, de manière entrelacée temporellement. L'analyse d'un lien bidirectionnel se décompose donc en analyse de congestion de liens monodirectionnels.

L'extrémité unitaire 5.1 est alors désignée comme maître pour le protocole. Ce protocole est ici aussi implémenté au sein de la couche applicative ou couche 3 de la pile de transmission. Chacune des extrémités multiples (5.21, 5.22) met en oeuvre un module esclave.

Le maître envoie une requête 5.3 à chacun des esclaves avec son débit pour la période précédente. Chaque esclave répond avec un message de réponse 5.4 comportant son débit pour la période précédente. Avantageusement chacune des réponses est acquittée par le maître sous la forme d'un message d'acquittement 5.5 à destination des esclaves.

La détection de congestion est alors faite par le module 5.11 par le maître par comparaison de son débit et de la somme des débits des esclaves. Ici encore l'information de congestion est avantageusement transmise au système de gestion de la qualité de service pour être utilisée dans la politique d'admission des services aux frontières du domaine.

Avantageusement les mêmes perfectionnements sur la base du calcul du temps de parcours aller-retour sont ici possibles.

De cette façon il est possible de détecter les congestions sur un lien avec un procédé fonctionnant entièrement sur la couche 3 ou couche applicative sans faire appel aux couches physiques et de contrôle du lien, couches 1 et 2. Ce mécanisme possède un temps de réaction paramétrable typiquement d'un ordre de grandeur en secondes compatible avec la gestion de la politique de qualité de service d'un domaine de qualité de service. Un gestionnaire de qualité de service peut donc avantageusement utiliser les informations de détection ainsi calculées pour maintenir la cohérence de la politique d'admission des services dans le domaine. Ainsi l'invention participe au maintien de la cohérence dans la diffusion de services temps réels nécessitant une bande passante constante. Il est donc possible de couper un service et d'éviter une dégradation voire une panne de l'ensemble des services lorsque la bande passante d'un lien est dégradée.

La détection de congestion peut être réalisée par catégorie de service sur la base des messages échangés entre le maître et ses esclaves contenant des informations de débit par catégorie de service. Un gestionnaire de qualité de service peut donc avantageusement utiliser les informations de détection ainsi calculées par catégorie de service pour maintenir la cohérence de la politique d'admission des services dans le domaine. Ainsi l'invention participe au maintien de la cohérence dans la diffusion de services temps réels nécessitant une bande passante constante et dans la diffusion des services non temps réels. Il est donc possible de couper un service, temps réel ou non, et d'éviter une dégradation voire une panne de l'ensemble des services lorsque la bande passante d'un lien est dégradée.

La communication bidirectionnelle entre deux noeuds repose sur l'utilisation d'une liaison de transmission par direction. Une détection de congestion est alors faite par liaison de transmission par un maître et un ou des esclaves associés à ce maître. Les informations de congestion de chaque détection de congestion sont avantageusement transmises au système de gestion de la qualité de service pour être utilisées dans la politique d'admission des services aux frontières du domaine.

## Revendications

1. Procédé de détection de la congestion d'un lien de transmission, le lien de transmission comportant deux extrémités, à chaque extrémité étant connecté un ou plusieurs équipements dits terminaux, au moins une extrémité ne comportant qu'un équipement unique, comportant les étapes suivantes :
- une étape de détermination d'une période de calcul ; **caracterisé en ce qu'**il comporte :
- une étape de détermination d'un maître et d'un ou plusieurs esclaves parmi les équipements connectés aux extrémités du lien de transmission, le maître étant toujours l'équipement unique d'une extrémité du lien ;
- une étape de calcul par chaque équipement du débit de données émises ou reçues pendant chaque période au sein de la couche applicative dudit équipement ;
- une étape d'émission à l'issue de chaque période d'une requête par le maître à destination du ou des esclaves comportant le débit calculé par le maître pour la période précédente sous la forme d'un message au sein de la couche applicative ;
- une étape de comparaison au sein de la couche applicative des débits émis et reçus aux deux extrémités du lien ;
- une étape de détermination au sein de la couche applicative d'une congestion lorsque le débit reçu à l'une des extrémités est inférieur au débit émis à l'autre extrémité.

2. Procédé de détection de la congestion d'un lien de transmission selon la revendication 1, **caractérisé en ce qu'**il comporte en outre :
- une étape d'émission par chaque esclave lors de la réception de la requête du maître d'une réponse comportant le débit émis ou reçu par ledit esclave pendant la période précédente sous la forme d'un message au sein de la couche applicative.

3. Procédé de détection de la congestion d'un lien de transmission selon la revendication 2, **caractérisé en ce qu'**il comporte en outre :
- l'émission d'un message d'acquittement par le maître du ou des réponses reçues sous la forme d'un message au sein de la couche applicative.

4. Procédé de détection de la congestion d'un lien de transmission selon la revendication 1, **caractérisé en ce qu'**il comporte en outre :
- l'esclave étant également unique à son extrémité du lien, l'étape de comparaison étant faite par l'esclave, une étape d'émission par l'esclave lors de la réception de la requête du maître d'une réponse comportant le débit émis ou reçu par ledit esclave pendant la période précédente lorsqu'une congestion est déterminée, sous la forme d'un message au sein de la couche applicative.

5. Procédé de détection de la congestion d'un lien de transmission selon l'une des revendications 2 à 4, **caractérisé en ce qu'**il comporte en outre :
- une étape de calcul du temps de parcours aller-retour lors de la réception d'une réponse par le maître ou d'un message d'acquittement par un esclave, un allongement progressif de ce temps permettant de prédire une congestion.

6. Procédé de détection de la congestion d'un lien de transmission selon la revendication 5, **caractérisé en ce qu'**il comporte en outre :
- une étape de détection de la perte d'un lien intermédiaire alors qu'il existe toujours un chemin entre l'émetteur et le récepteur par un allongement soudain du temps de parcours aller-retour.

7. Procédé de gestion de la qualité de service **caractérisé en ce qu'**il comporte une étape de détermination de l'admission des services aux frontières d'un domaine de qualité de service en fonction d'une détermination de la congestion d'au moins un lien selon l'une des revendications 1 à 6.

8. Equipement connecté à une extrémité d'un lien de transmission, une période de calcul étant définie, comportent au sein de la couche applicative :
- des moyens de calcul du débit de données émises ou reçues pendant chaque période ; **caractérisé en ce qu'**il comporte
- des moyens d'émettre à l'issue de chaque période d'une requête, à destination du ou des équipements connectés à l'autre extrémité du lien, comportant le débit calculé pour la période précédente ;
- des moyens de comparer au sein de la couche applicative les débits émis et reçus aux deux extrémités du lien ;
- une étape de déterminer une congestion lorsque le débit reçu à l'une des extrémités est inférieur au débit émis à l'autre extrémité.

## Patentansprüche

1. Verfahren zur Erfassung der Überlastung eines Übertragungslinks, wobei der Übertragungslink zwei Enden aufweist, wobei mit jedem Ende ein oder mehrere als Endgeräte bezeichnete Geräte verbunden sind, wobei mindestens ein Ende nur ein Gerät aufweist, das die folgenden Schritte aufweist:
- einen Schritt der Bestimmung eines Berechnungszeitraums;
**dadurch gekennzeichnet, dass** es aufweist:
- einen Schritt der Bestimmung eines Masters und eines oder mehrerer Slaves unter den mit den Enden des Übertragungslinks verbundenen Geräten, wobei der Master immer das einzige Gerät eines Endes des Links ist;
- einen Schritt der Berechnung, durch jedes Gerät, der Übertragungsrate von innerhalb der Anwendungsschicht des Geräts während jedes Zeitraums gesendeten oder empfangenen Daten;
- einen Schritt des Sendens, nach jedem Zeitraum, einer die vom Master für den vorhergehenden Zeitraum berechnete Übertragungsrate aufweisenden Anforderung vom Master an den Slave oder an die Slaves in Form einer Mitteilung innerhalb der Anwendungsschicht;
- einen Schritt des Vergleichens, innerhalb der Anwendungsschicht, der an den zwei Enden des Links gesendeten und empfangenen Übertragungsraten;
- einen Schritt der Bestimmung einer Überlastung innerhalb der Anwendungsschicht, wenn die an einem der Enden empfangene Übertragungsrate niedriger als die am anderen Ende gesendete Übertragungsrate ist.

2. Verfahren zur Erfassung der Überlastung eines Übertragungslinks nach Anspruch 1, **dadurch gekennzeichnet, dass** es außerdem aufweist:
- einen Schritt des Sendens, durch jeden Slave, bei Empfang der Anforderung des Masters, einer die vom Slave während des vorhergehenden Zeitraums gesendete oder empfangene Übertragungsrate aufweisenden Antwort in Form einer Mitteilung innerhalb der Anwendungsschicht.

3. Verfahren zur Erfassung der Überlastung eines Übertragungslinks nach Anspruch 2, **dadurch gekennzeichnet, dass** es außerdem aufweist:
- das Senden einer Quittierungsmitteilung der oder von empfangenen Antworten in Form einer Mitteilung innerhalb der Anwendungsschicht durch den Master.

4. Verfahren zur Erfassung der Überlastung eines Übertragungslinks nach Anspruch 1, **dadurch gekennzeichnet, dass** es außerdem aufweist:
- wenn der Slave ebenfalls an seinem Ende des Links einzig ist, wobei der Vergleichsschritt vom Slave ausgeführt wird, einen Schritt des Sendens, durch den Slave bei Empfang der Anforderung vom Master, einer Antwort, die die von dem Slave während des vorhergehenden Zeitraums, wenn eine Überlastung bestimmt wird, gesendete oder empfangene Übertragungsrate aufweist, in Form einer Mitteilung innerhalb der Anwendungsschicht.

5. Verfahren zur Erfassung der Überlastung eines Übertragungslinks nach einem der Ansprüche 2 bis 4, **dadurch gekennzeichnet, dass** es außerdem aufweist:
- einen Schritt der Berechnung der Hin- und Her-Laufzeit bei Empfang einer Antwort vom Master oder einer Quittierungsmitteilung von einem Slave, wobei eine progressive Verlängerung dieser Zeit die Vorhersage einer Überlastung erlaubt.

6. Verfahren zur Erfassung der Überlastung eines Übertragungslinks nach Anspruch 5, **dadurch gekennzeichnet, dass** es außerdem aufweist:
- einen Schritt der Erfassung des Verlusts eines Zwischenlinks, während es immer noch einen Pfad zwischen dem Sender und dem Empfänger gibt, durch eine plötzliche Verlängerung der Hin- und Her-Laufzeit.

7. Verfahren zur Verwaltung der Dienstqualität, **dadurch gekennzeichnet, dass** es einen Schritt der Bestimmung der Zulassung der Dienste an den Grenzen eines Dienstqualitätsbereichs abhängig von einer Bestimmung der Überlastung mindestens eines Links nach einem der Ansprüche 1 bis 6 aufweist.

8. Gerät, das mit einem Ende eines Übertragungslinks verbunden ist, wobei ein Berechnungszeitraum definiert ist, die innerhalb der Anwendungsschicht aufweist:
- Einrichtungen zur Berechnung der Übertragungsrate von während jedes Zeitraums gesendeten oder empfangenen Daten;
**dadurch gekennzeichnet, dass** es aufweist:
- Einrichtungen, um nach jedem Zeitraum an ein Gerät oder an Geräte, die mit dem anderen Ende des Links verbunden sind, eine Anforderung zu senden, die die für den vorhergehende Zeitraum berechnete Übertragungsrate aufweist;
- Einrichtungen, um innerhalb der Anwendungsschicht die an den zwei Enden des Links gesendeten und empfangenen Übertragungsraten zu vergleichen;
- einen Schritt der Feststellung einer Überlastung, wenn die an einem der Enden empfangene Übertragungsrate niedriger als die am anderen Ende gesendete Übertragungsrate ist.

## Claims

1. Method for detecting congestion on a transmission link, the transmission link having two ends, one or more items of equipment referred to as terminals being connected to each end, at least one end having only one item of equipment, comprising the following steps:
- a step of determining a calculation period;
**characterized in that** it comprises:
- a step of determining a master and one or more slaves among the items of equipment connected to the ends of the transmission link, the master always being the only one item of equipment at one end of the link;
- a step of calculating, by each item of equipment, the data rate sent or received during each period in the application layer of said equipment;
- a step of sending, at the end of each period, a request by the master to the slave or slaves comprising the rate calculated by the master for the previous period in the form a message in the application layer;
- a step of comparing, in the application layer, the rates sent and received at the two ends of the link;
- a step of determining, in the application layer, a congestion when the rate received at one of the ends is less than the rate sent at the other end.

2. Method for detecting congestion in a transmission link according to claim 1, **characterised in that** it further comprises:
- a step of sending, by each slave, when the request is received from the master, a response containing the rate sent or received by said slave during the previous period in the form of a message in the application layer.

3. Method for detecting congestion on a transmission link according to claim 2, **characterised in that** it further comprises:
- sending a message acknowledging by the master the response or responses received in the form of a message in the application layer.

4. Method for detecting congestion on a transmission link according to claim 1, **characterised in that** it further comprises:
- the slave also being the only one at its end of the link, the comparing step being made by the slave, a step of sending by the slave, when the request is received from the master, a response containing the rate sent or received by said slave during the previous period when a congestion is determined, in the form of a message in the application layer.

5. Method for detecting congestion on a transmission link according to one of claims 2 to 4, **characterised in that** it further comprises:
- a step of calculating the round trip time when a response is received by the master or an acknowledgement message by a slave, a gradual extension of this time enabling predicting a congestion.

6. Method for detecting congestion on a transmission link according to claim 5, **characterised in that** it further comprises:
- a step of detecting the loss of an intermediate link when there still exists a path between the sender and the receiver by a sudden extension of the round trip time.

7. Method for managing quality of service, **characterised in that** it comprises a step of determining the admission of the services at the edges of a quality of service domain according to a determination of the congestion on at least one link according to any one of claims 1 to 6.

8. Item of equipment connected to one end of a transmission link, a computing period being defined, comprising in the application layer:
- means for calculating the data rate sent or received during each period; **characterized in that** it comprises:
- means for sending, at the end of each period, a request to the item or items of equipment connected to the other end of the link, comprising the rate calculated for the previous period;
- means for comparing, in the application layer, the rates sent and received at the two ends of the link;
- means for determining a congestion when the rate received at one of the ends is less than the rate sent at the other end.
